(19) Europäisches Patentamt
European Patent Office
Office européen des brevets

(11) **EP 2 353 404 A1**

(12) **EUROPEAN PATENT APPLICATION**
published in accordance with Art. 153(4) EPC

(43) Date of publication:
**10.08.2011 Bulletin 2011/32**

(51) Int Cl.:
***A23L 1/27*** (2006.01) ***A23L 2/58*** (2006.01)

(21) Application number: **09826194.4**

(86) International application number:
**PCT/JP2009/069508**

(22) Date of filing: **17.11.2009**

(87) International publication number:
**WO 2010/055949 (20.05.2010 Gazette 2010/20)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.11.2008 JP 2008293925**

(71) Applicant: **San-Ei Gen F.F.I., INC.**
**Toyonaka-shi, Osaka 561-8588 (JP)**

(72) Inventors:
• **HIGASHIMURA, Yutaka**
**Toyonaka-shi**
**Osaka 561-8588 (JP)**

• **KURIHARA, Kenta**
**Toyonaka-shi**
**Osaka 561-8588 (JP)**
• **YAMADA, Keiko**
**Toyonaka-shi**
**Osaka 561-8588 (JP)**
• **MAEDA, Chika**
**Toyonaka-shi**
**Osaka 561-8588 (JP)**

(74) Representative: **Müller-Boré & Partner**
**Patentanwälte**
**Grafinger Straße 2**
**81671 München (DE)**

(54) **MALT EXTRACT AND MANUFACTURING METHOD THEREFOR**

(57) This invention provides an acid-resistant malt extract useful to add a clear or transparent color to acidic food and beverage having a pH value of not less than 2 and less than 4.6, without generating suspended or sedimented insoluble matter; and a manufacturing method therefor. The malt extract of the present invention is obtained by adjusting the particle diameter of insoluble particles contained in the malt extract to less than 0.9 μm by way of, for example, filtering an untreated liquid malt extract or a treated liquid thereof using a filter having a pore diameter of 0.9 μm or less.

EP 2 353 404 A1

**Description**

Technical Field

The present invention relates to a malt extract useful as a natural brown colorant, and a manufacturing method therefor. The present invention particularly relates to a malt extract capable of adding a clear or transparent color to foods and beverages such as beverages, without generating suspended or sedimented insoluble matter; and a manufacturing method therefor. The present invention further relates to an acid-resistant malt extract suitable to color acidic foods and beverages having a pH value of not less than 2 and less than 4.6, and a manufacturing method therefor.

Background Art

Caramel colorants (Caramel I, Caramel II, Caramel III, and Caramel IV), kaoliang colorants, onion colorants, cacao colorants, tamarind colorants and the like are known as natural colorants that can add a brown color to various food products such as beverages. In particular, Caramel colorants account for 80% of Japanese demand for natural brown colorants, and its consumption is 18,500 tn. per year. Caramel colorants are obtained by heating edible carbohydrates such as starch hydrolysate, molasses or sugars; and are classified as type I, type II, type III, or type IV, according to the production process. Among them, only type IV is acid-resistant. However, use of Caramel colorant type IV is often avoided in view of safety concerns, because its manufacturing process uses sulfite compounds and ammonium compounds during the heating of edible carbohydrate. In addition, kaoliang colorants, onion colorants, and cacao colorants generate precipitation of insoluble matter under acidic conditions, thereby causing problematic sedimentation or turbidity when used for acidic foods and beverages.

Malt extracts, produced through concentration and saccharification of malt juice, have conventionally been used to add a beer-like flavor to carbonated beverages (Patent Documents 1 and 2), or as a sweetener (Patent Document 3). Additionally, Patent Document 4 discloses the usefulness of a roasted malt extract as a flavor or a colorant of noodles.

Citation List

■ Patent Document

[Patent Document 1] Japanese Unexamined Patent Publication No. 2003-250503
[Patent Document 2] Japanese Unexamined Patent Publication No. S63-501193
[Patent Document 3] Japanese Unexamined Patent Publication No. 2004-350570
[Patent Document 4] Japanese Unexamined Patent Publication No. H11-266809

Summary of Invention

Technical Problem

Conventional natural brown colorants generally have low acid resistance. Particularly, under low pH conditions (such as pH of 4 or lower) (acidic conditions), the colorant component becomes insoluble. This causes problems such as sedimentation of insolubilized colorant in the acid beverages, thereby failing to add a desired color to the acidic food or beverage. Further, although the Caramel colorant (type IV) is an acid-resistant natural colorant capable of adding a brown color to acidic foods and beverages, as mentioned above, use of it is often avoided in view of safety concerns, because its manufacturing process uses sulfite compounds and ammonium compounds during the heating of edible carbohydrates. In contrast, the colorant component of a malt extract is dissolvable under acidic conditions; further, it has a stability under acidic conditions (acid-resistant) superior to those of known natural brown colorants (Caramel colorants (Caramel I, Caramel II, Caramel III), kaoliang colorants, onion colorants, cacao colorants, and tamarind colorants). Moreover, the malt extracts, as natural colorants made of malt juice, ensure high safety.

Malt extracts have hitherto been mainly used to add flavor to food products. In this usage, the malt extract adjusted to have an absorbance of about 10 to 30 at a wavelength of 500 nm is used. To add a desirable color to the target product using such a malt extract, the addition amount of the malt extract must be high. For example, when a malt extract having an absorbance of about 30 is used to color cola beverages, the addition amount of the same must be at least 1 mass%. However, addition of a large amount of malt extract generates suspended or sedimented matter during manufacturing or with time, in association with the increase in amount, thereby significantly decreasing the marketability of the food or beverage. Moreover, there is another problem in that the flavor of the malt extract deteriorates the taste of the food or beverage. In fact, Patent Document 1 recites that addition of more than 0.1 w/v% of a malt extract develops a discordant or harsh flavor, thereby deteriorating the taste.

Further, such generation of suspended or sedimented insoluble matter during manufacturing or with time also occurs even when the food or beverage is colored with a small amount of a concentrated malt extract having an absorbance of about 10 to 1000 at a wavelength of 500 nm. In particular, even if the insoluble matter during manufacturing is removed, it is not possible to prevent the generation of the insoluble matter with time. This deposition of insoluble matter over time can be a critical defect of the target product, particularly for some beverages that must have a certain degree of transparency. For this reason, malt extracts as a colorant are used for few kinds of food and beverage products.

In fact, in Patent Documents 1 and 3, the malt extracts are used only to add sweetness or flavors to the products. Further, in Patent Document 1, the addition amount of malt extract is very low, i.e., 0.55 g/1000 ml. More specifically, Patent Document 1 and 3 are silent about the object to suppress generation of insoluble matter during coloring of food and beverage using concentrated malt extracts.

Similarly, Patent Document 4 is also completely silent about preventing sedimentation that occurs due to incorporation of a concentrated malt extract.

Patent Document 2 discloses a manufacturing process of a hop and malt-containing beverage comprising the steps of: heating a diluted malt extract, and separating the aggregated protein together with a precipitating agent, using a centrifuge or a separator. Although temporary removal of turbidity during manufacture is possible in this method, it is not possible to prevent sedimentation of insoluble matter that will be generated with time.

In view of those problems, an object of the present invention is to provide a malt extract useful as a natural brown colorant for food and beverage that ensures high safety. The present invention is particularly aimed at providing a malt extract as an acid-resistant brown colorant that can be a replacement for Caramel colorant (type IV) which has been hitherto used as a natural brown colorant. More specifically, the present invention is aimed at providing an acid-resistant malt extract useful as a brown colorant capable of adding a clear or transparent brown color to commodities such as acidic beverages, which can advantageously suppress sedimentation of insoluble matter with time when used to color an acidic product having a pH value of not less than 2 and less than 4.6.

Solution to problem

The inventors of the present invention conducted extensive research in view of the above problems of conventional technology, and found that the precipitation of insoluble matter in a product to be colored during manufacturing or with time can be suppressed, for example, by filtering the malt extract using a filter having a pore diameter of 0.9 μm or less so that the diameter of insoluble particles remaining in the malt extract becomes less than 0.9 μm. With this method, the malt extract can add a clear or transparent color to target products such as beverages. The inventors further found that this malt extract of the present invention causes no precipitation of visible insoluble matter even when it is dissolved in water adjusted to have a pH of not less than 2 and less than 4.6 so that the resulting solution has an absorbance of 0.1 or more, 0.5 or more, or 1.0 or more, thereby successfully adding a clear or transparent color to acidic food products such as carbonated beverages.

The present invention was completed based on these findings, and includes the following aspects.

(I) Malt extract and a manufacturing method therefor

(I-1) A malt extract which comprises insoluble particles, a particle diameter of the insoluble particles being less than 0.9 μm.

(I-2) The malt extract according to Item (I-1) which is prepared by removing insoluble matter having a particle diameter of 0.9 μm or more from an untreated liquid malt extract or a treated liquid thereof.

(I-3) The malt extract according to Item (I-1), wherein the malt extract is prepared by filtering an untreated liquid malt extract or a treated liquid thereof using a filter having a pore diameter of 0.9 μm or less.

(I-4) The malt extract according to Item (I-2) or (I-3), wherein the untreated liquid malt extract or the treated liquid thereof has an absorbance of 10 to 1000 at a wavelength of 500 nm.

(I-5) The malt extract according to any one of Items (I-2) to (I-4), wherein the untreated liquid malt extract is obtained by saccharifying malt juice extracted from malt or roasted malt by heating.

(I-6) The malt extract according to any one of Items (I-2) to (I-4), wherein the treated liquid of an untreated liquid malt extract is either a diluted solution of an untreated liquid malt extract, a malt extract-redissolved liquid obtained by drying an untreated liquid malt extract or a diluted solution thereof and subsequently redissolving the resulting dry solid in a solvent, or a treated liquid obtained by subjecting an untreated liquid malt extract or a diluted solution thereof to centrifuge.

(I-7) A method for manufacturing a malt extract which comprises a step of removing insoluble matter having a particle diameter of 0.9 μm or more from an untreated liquid malt extract or a treated liquid thereof.

(I-8) A method for manufacturing a malt extract which comprises a step of obtaining a malt extract by removing insoluble matter having a particle diameter of 0.9 μm or more from an untreated liquid malt extract or a treated liquid thereof.

(I-9) A method for manufacturing a malt extract which comprises a step of filtering an untreated liquid malt extract or a treated liquid thereof using a filter having a pore diameter of 0.9 μm or less.

(I-10) A method for manufacturing a malt extract which comprises a step of obtaining a malt extract by removing insoluble matter having a particle diameter of 0.9 μm or more from an untreated liquid malt extract or a treated liquid thereof.

In the malt extracts according to the methods of (I-7) to (I-10), the precipitation with time is suppressed. Therefore, they are "malt extracts in which the precipitation with time is suppressed".

(I-11) The method according to any one of Items (I-7) to (I-10), wherein the untreated liquid malt extract or the treated liquid thereof has an absorbance of 10 to 1000 at a wavelength of 500 nm.

(I-12) The method according to any one of Items (I-7) to (I-11), wherein the untreated liquid malt extract is obtained by saccharifying malt juice extracted from malt or roasted malt by heating.

(I-13) The method according to any one of Items (I-7) to (I-11), wherein the treated liquid of an untreated liquid malt extract is either a diluted solution of an untreated liquid malt extract, a malt extract-redissolved liquid obtained by drying an untreated liquid malt extract or a diluted solution thereof and redissolving a resulting dry solid in a solvent, or a treated liquid obtained by subjecting an untreated liquid malt extract or a diluted solution thereof to centrifuge.

(II) Colorant, colored product and coloring method using malt extract

(II-1) A brown colorant which comprises the malt extract according to any one of Items (I-1) to (I-5).

(II-2) A colored product which is colored with the malt extract according to any one of Items (I-1) to (I-5).

(II-3) The colored product according to Item (II-2), wherein the colored product is an acidic product having a pH value of not less than 2 and less than 4.6.

(II-4) The colored product according to Item (II-3), wherein the acidic product is an acidic beverage.

(II-5) A method for coloring food and beverage, comprising adding the malt extract according to any one of Items (I-1) to (I-5) into food or beverage.

(II-6) The method according to Item (II-5), wherein the food or beverage is an acidic food or beverage having a pH value of not less than 2 and less than 4.6.

Advantageous Effects of Invention

The present invention provides an acid-resistant malt extract, and a manufacturing method therefor. By coloring the target product using the malt extract of the present invention, particularly for an acidic product having a pH value of not less than 2 and less than 4.6, it is possible to significantly suppress precipitation of insoluble matter of the product to be colored that occurs during the coloring of the product or with time. With this advantage, the malt extract of the present invention serves as a brown colorant that can be a replacement for Caramel colorant (type IV) that has hitherto been used as an acid-resistant natural brown colorant. Thus, the malt extract of the present invention is capable of adding clear or transparent brown colors to acidic beverages such as carbonated beverages.

Brief Description of Drawings

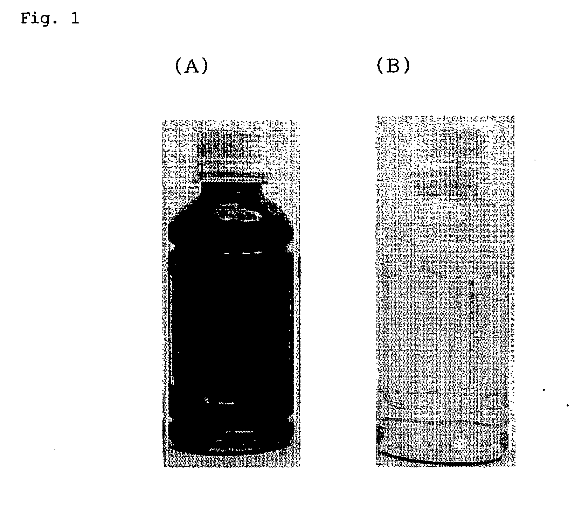

[Fig. 1] A color diagram showing exteriors of (A) a solution (sedimentation scale = "-") having a pH value of 3 prepared in Experiment Example 2 using a filtered malt extract according to Example 1, and (B) a solution (sedimentation scale = " +++++ ") having a pH value of 3 prepared using a kaoliang colorant.

Description of Embodiments

(I) Malt extract of the present invention

The malt extract of the present invention is characterized in that insoluble matter having a particle diameter of 0.9 μm or more are removed from the malt extract; in other words, in that particle diameter of insoluble particles remaining in the malt extract is less than 0.9 μm. Preferably, the particle diameter of the insoluble particles remaining in the malt extract is less than 0.8 μm, more preferably less than 0.6 μm.

In the present invention, the condition where the particle diameter of the insoluble particles remaining in the malt extract is less than 0.9 μm is confirmed in the following manner. First, the malt extract is prepared as an aqueous solution having an absorbance of 0.1 at a wavelength of 500 nm. Then, it is confirmed by visual inspection that there is no visible insoluble matter on the filter after the malt extract is filtered using a filter having a pore diameter of 0.9 $\mu$m; and it is also confirmed, using a laser diffraction particle size analyzer, that there is no insoluble matter having a mean particle diameter of 0.9 $\mu$m or more in the recovered filtrate. Similarly, the condition where the particle diameter of the insoluble particles remaining in the malt extract is less than 0.8 $\mu$m or less than 0.6 $\mu$m is confirmed in the following manner. The malt extract is prepared as an aqueous solution having an absorbance of 0.1 at a wavelength of 500 nm. Then, it is confirmed by visual inspection that there is no visible insoluble matter on the filter after the malt extract is filtered using a filter having a pore diameter of 0.8 $\mu$m or 0.6 $\mu$m; and it is also confirmed, using a laser diffraction particle size analyzer, that there is no insoluble particles having a mean particle diameter of 0.8 $\mu$m or more, or 0.6 $\mu$m or more in the recovered filtrate.

Here, the material of the filter used for the filtration is not limited. Examples of the materials include various natural, synthetic, or semi-synthetic materials including cellulose, cellulose diacetate or triacetate, and like cellulose-mixed esters, polytetrafluoroethylene, polyamide, polysulfone, polystyrene, polyimide and polyacrylonitrile. Among them, cellulose, cellulose diacetate or triacetate, and like cellulose-mixed esters, and polytetrafluoroethylene are preferable.

The pore diameter of the filter may be evaluated based on bubble point method (JIS K 3832). Specifically, this method measures the pressure (bubble point) at which air is extruded through the pores of a membrane filter completely permeated with a liquid (water or isopropyl alcohol), thereby finding a maximum pore diameter of the membrane filter.

The malt extract in which the remaining insoluble particles have a particle diameter of less than 0.9 $\mu$m includes a malt extract in which the remaining insoluble particles have a particle diameter of less than 0.9 $\mu$m at least upon manufacturing. The malt extract of the present invention is capable of suppressing precipitation of insoluble matter for a long period of time, for example, several months to more than a year. However, insoluble particles having a particle diameter of less than 0.9 $\mu$m upon manufacturing may grow as time passes after manufacturing, and the particle diameter may become 0.9 $\mu$m or more even when the precipitation of insoluble matter can be avoided. However, as described above, such a malt extracted is regarded as the malt extract of the present invention, insofar as the particle diameter of insoluble particles contained in the malt extract is less than 0.9 $\mu$m upon manufacturing.

Although the malt extract of the present invention may be prepared by removing insoluble matter having a particle diameter of 0.9 $\mu$m or more; in view of suppressing precipitation of insoluble matter with time, it is preferable to prepare the malt extract of the present invention by removing insoluble matter having a particle diameter of 0.8 $\mu$m or more, more preferably insoluble matter having a particle diameter of 0.6 $\mu$m or more. With this method, precipitation of insoluble matter can be more significantly suppressed. For example, it becomes possible to suppress precipitation of insoluble matter for a long period of time, for example, several months to more than a year. More preferably, the malt extract of the present invention is capable of suppressing precipitation of insoluble matter with time even when it is prepared as a concentrated extract having an absorbance of 10 to 1000 at a wavelength of 500 nm, more preferably, having an absorbance of 50 to 1000. Hereinafter, the term "absorbance" denotes an absorbance at a wavelength of 500 nm, unless otherwise specified.

Further, the malt extract of the present invention is characterized in that precipitation of insoluble matter is not observable by visual inspection and precipitation of insoluble matter with time is suppressed even when the malt extract is dissolved in water having a pH value of not less than 2 and less than 4.6 so that an absorbance of the solution become 0.1 or more, preferably 0.5 or more, more preferably 1.0 or more. Here, the suppression of precipitation of insoluble matter with time can be tested by confirming that the malt extract produces less precipitation with time than a control article obtained by dissolving an untreated liquid malt extract or a treated liquid thereof that contains insoluble matter having a particle diameter of 0.9 $\mu$m or more in water having a pH value of not less than 2 and less than 4.6 with an absorbance to 0.1 or more.

As such, since the malt extract of the present invention is acid-resistant, and capable of suppressing precipitation of insoluble matter with time, it is suitable to color acidic products, particularly for acidic products having a pH value of not less than 2 and less than 4.6. Moreover, since the malt extract of the present invention is capable of adding clear or transparent colors to acidic products having a pH value of not less than 2 and less than 4.6, it is suitable for acidic products that require particular clarity or transparency, such as acidic beverages. To add colors to such acidic beverages, it is preferable to use a malt extract of the present invention adjusted to have an absorbance of 10 to 1000, more preferably 50 to 1000.

In contrast, conventional natural brown colorants including kaoliang colorant, onion colorant, cacao colorant, tamarind colorant, etc., causes insolubilization of the colorant component under acidic conditions, and therefore cannot be used for acidic products. Further, although Caramel colorant (type IV) can be used as a natural brown colorant under acidic conditions, its use is often avoided in view of safety concern, because its manufacturing process uses sulfite compounds and ammonium compounds during the heating of edible carbohydrates. The malt extract of the present invention is highly usable in terms of its very easy method of manufacture, which simply decreases the particle diameter of insoluble particles remaining in the malt extract to 0.9 $\mu$m or less; and also in terms of its ability to add clear or transparent brown colors to acidic products without causing insolubilization of the colorant component under acidic conditions.

(II) Preparation method for malt extract of the present invention

The malt extract of the present invention having such characteristics can be prepared by removing insoluble matter having a particle diameter of 0.9 μm or more. The removal method is not particularly limited insofar as the insoluble matter is removed from the extract, and examples thereof include various methods. The method is preferably filtration, or centrifugation.

The malt extract used to prepare the malt extract of the present invention (an untreated liquid (a stock solution) in the form of a syrup; hereinafter referred to as "an untreated liquid malt extract") is not particularly limited insofar as it is a malt extract obtained by saccharifying malt juice extracted from malt or roasted malt. A preferable untreated liquid molt extract is obtained by saccharifying malt juice extracted from malt or roasted malt with water. A specific example of such an untreated liquid malt extract is obtained by permeating malt or roasted malt with a 0.5- to 100-fold amount (preferably 5- to 20-fold amount) of water, for 30 minutes to 15 hours at room temperature to 100°C; stirring the mixture as required to extract malt juice, and then saccharifying the malt juice.

The saccharification is performed, for example, by heating malt juice for 30 minutes to 5 hours at 50 to 70°C, preferably 1 to 3 hours at 60 to 70°C, and stirring the mixture as required. With this method, the sugar component is decomposed by the saccharifying enzyme contained in the malt, thereby saccharifying the extract.

In usage of the malt extract of the present invention as a colorant, it is preferable to use a concentrated malt extract adjusted to have an absorbance of 10 to 1000, more preferably 50 to 1000, as an untreated liquid malt extract.

The concentrated an untreated liquid malt extract can be obtained by appropriately selecting one of: a method of increasing the roasting degree of malt; a method of using Munich malt, roasted malt, chocolate malt, caramel malt, etc., as the malt material; and a method of repeating concentration of the malt extract using a UF membrane or the like. The present invention is particularly characterized in utilization of a malt extract having high colorant density as a natural brown colorant.

A malt extract not processed to remove insoluble matter having a particle diameter of 0.9 μm or more, i.e., a malt extract containing insoluble matter having a particle diameter of 0.9 μm or more generates insoluble matter with time when prepared as a concentrated extract. Moreover, when such an extract is used as a brown colorant, it causes a problem such that suspended or sedimented matter is generated upon manufacturing of the colored product, or with time. Therefore, the malt extract not processed to remove insoluble matter having a particle diameter of 0.9 μm or more cannot be prepared as a concentrated extract to be used as a brown colorant.

In the present invention, by removing insoluble matter having a particle diameter of 0.9 μm or more, it is possible to adjust the particle diameter of the insoluble particles remaining in the malt extract to 0.9 μm or less. The present invention is characterized in that, thereby, the malt extract itself does not cause precipitation of insoluble matter during the conservation, and the precipitation of insoluble matter observable by visual inspection is suppressed even when the malt extract is dissolved in water having a pH value of not less than 2 and less than 4.6 so that an absorbance of 0.1 or more (preferably 0.5 or more, or 1.0 or more) can be obtained.

Here, suppression of precipitation of insoluble matter can be tested by confirming that the precipitation of insoluble matter is not observable by visual inspection when the malt extract is dissolved in water having a pH value of not less than 2 and less than 4.6 with an absorbance of 0.1 or more, and confirming significant reduction of the precipitation with time. The malt extract of the present invention with such a characteristic makes it possible to add clear or transparent brown colors to acidic products having a pH value of not less than 2 and less than 4.6 such as acidic beverages including carbonated beverages, while suppressing precipitation of insoluble matter.

The final product form of the malt extract of the present invention is not limited, and may be a liquid, a solid, or a paste.

The filtration to remove insoluble matter having a particle diameter of 0.9 μm or more may be carried out using any of natural filtration, reduced pressure filtration, pressure filtration, centrifuge filtration, thermal filtration, and ultrafiltration. The filter used in the filtration is not particularly limited insofar as it can remove insoluble matter having a particle diameter of 0.9 μm or more. In view of suppression of precipitation of insoluble matter with time, it is preferable to use a filter capable of removing insoluble matter having a particle diameter of 0.8 μm or more, more preferably 0.6 μm or more. For example, a filter having a pore diameter of 0.9 μm or less, preferably 0.8 μm or less, more preferably 0.6 μm or less may be suitably used.

Here, the material of the filter used for the filtration is not limited. Examples of the materials include various natural, synthetic, or semi-synthetic materials as listed in Section (I) above. Preferable examples thereof include cellulose; cellulose diacetate or triacetate and like cellulose-mixed esters; and polytetrafluoroethylene.

The pore diameter of the filter may be evaluated based on the bubble point method (JIS K 3832), as explained in Section (I) above.

The filtration may be performed by directly filtering an untreated liquid malt extract, or filtering a solution obtained by diluting the an untreated liquid malt extract with water or like solvents (i.e., malt extract diluted solution). Further, it is also possible to filter a solution obtained by dissolving a dry product (i.e., malt extract-redissolved liquid), which results from drying of an untreated liquid malt extract or a diluted solution thereof by spray drying, with water or like solvents. Moreover, the filtration may be performed by filtering a solution prepared in advance by processing an untreated liquid malt extract or a diluted solution thereof using a decanter, or a Sharpless type centrifuge or like centrifuges. In the present invention, the malt extract-diluted solution, the malt extract-redissolved liquid, and the solution obtained by processing a malt extract using a decanter or centrifuge are all generically called a "malt extract-treated liquid".

When insoluble matter having a particle diameter of 0.9 μm or more is removed by centrifugation, it is preferable to apply a centrifugal force of 12000 G or more. Although a centrifugal force of about 3000 G is normally used, such a centrifugal force would not separate and remove fine insoluble matter having a particle diameter of 0.9 μm or more, specifically from about 0.9 to 5 μm. Therefore, it is not possible to prevent precipitation of insoluble matter in the malt extract and precipitation of insoluble matter in the acidic product colored with the malt extract.

The centrifuge used to remove insoluble matter having a particle diameter of 0.9 μm or more is not particularly limited insofar as it is capable of applying a centrifugal force of 12000 G or more, and various centrifuges meeting this condition can be used. Usually, the ability of a centrifuge is shown by its centrifugal force expressed as G (gravitational acceleration). According to this value, those capable of applying several thousands of G are called centrifuges, and those capable of applying several tens of thousands of G are called ultracentrifuges. Therefore, the preparation of the malt extract of the present invention is preferably performed using an ultracentrifuge capable of applying a centrifugal force of 12000 G or more. As with the filtration, the centrifugation may be carried out directly with respect to an untreated liquid malt extract, or with respect to a malt extract-treated liquid such as a malt extract-diluted solution, or a redissolved liquid.

The centrifugal force may be given by the following equation.

$$\texttt{Centrifugal force (G)} = 1.118 \times 0.00001 \times \texttt{(centrifugal radius (cm))} \times \texttt{(revolutions per minute (rpm))}^2$$

In the conventional technologies, the production process of the acid-resistant natural colorant or refinement of the natural colorant needs various processes including an acid treatment under acidic conditions of a pH value of 4 or less; an adsorption treatment using activated carbons, silica gels, porous ceramics or synthetic adsorbent resin; an ion-exchange treatment using cation exchange resins or anion exchange resins; an enzymatic treatment; and the like. Further, those treatments are ineffective if they are performed alone; that is, it is necessary to combine multiple steps to complete the final product. In contrast, the present invention makes it possible to prepare a malt extract which is suppressed to generate precipitation of insoluble matter with time using a very convenient step of removing insoluble matter having a particle diameter of 0.9 μm or more from an untreated liquid malt extract or a treated liquid thereof, and also prepare a malt extract usable for coloring of acidic products. However, in the manufacturing method for the malt extract of the present invention, the aforementioned various treatments are not excluded. For example, the manufacturing method of the present invention may selectively adopt the aforementioned various treatments (acid treatment, adsorption treatment, ion-exchange treatment, and enzyme treatment) as necessary before and after the step of removing insoluble matter having a particle diameter of 0.9 μm or more by way of filtration or centrifugation.

In the malt extract of the present invention thus obtained, precipitation of insoluble matter is significantly suppressed even when the malt extract has a high concentration, i.e., an absorbance of 10 to 1000, more preferably 50 to 1000. With this advantage, the malt extract is capable of adding a clear or transparent color to various products, particularly various beverages, as a brown colorant. Further, since the malt extract is acid-resistant, it can be suitably used particularly in an acidity range with a pH value of less than 4.6, or even with a pH value of 3 or less. Among conventional natural brown colorants, only Caramel colorant (type IV) was able to be used without precipitation of insoluble matter at a pH value of less than 4.6. However, the malt extract of the present invention can be used as a natural brown colorant that can be a replacement for Caramel colorant (type IV).

(III) Brown colorant and colored products

The present invention provides a usage of the malt extract of the present invention as a brown colorant. More specifically, the brown colorant of the present invention is a colorant containing the malt extract of the present invention as an ingredient.

The brown colorant of the present invention may be the malt extract itself of the present invention, or may be a liquid obtained by dissolving or dispersing (emulsifying) the malt extract of the present invention in water, ethanol, propylene glycol and like alcohols, or other polar solvents. Moreover, the malt extract of the present invention may be a dry solid (powder, granule, tablets, etc.) prepared by drying the malt extract of the present invention or the above liquids. However, because one of the advantages of the brown colorant of the present invention is high safety as a natural colorant made of a malt extract that is a natural food material, it is preferable to prepare the brown colorant of the present invention without using additives, particularly artificial additives.

Therefore, the brown colorant of the present invention is useful as a natural brown colorant for various products such as food and beverage products, drugs, quasi-drugs, cosmetics, feedstuffs or the like. Especially, the brown colorant of the present invention is useful as a colorant for food and beverage. Examples of the food and beverage to which the colorant of the present invention is applied include, but are not limited to, ice cream, ice milk, lact-ice (an ice cream-like dessert having a low milk solids content), sherbet, ice candies, and like frozen desserts; milk beverages, lactic acid bacteria beverages, soft drinks (including those containing fruit juices), carbonated beverages, fruit juice beverages, vegetable beverages, vegetable-fruit beverages, sports drinks, powdered beverages, and like beverages; liqueurs and like alcoholic beverages; coffee beverages, black tea beverages, and like coffee or tea beverages; consommés, potages, and like soups; custard puddings, milk puddings, fruit juice-containing puddings, and like puddings; jellies, Bavarian creams, yogurts, and like desserts; chewing gums, bubble gums, and like gums (stick gums, sugar-coated tablet gums); coated chocolates, such as colored sugar-coated chocolate candies, and the like; strawberry chocolates, blueberry chocolates, melon chocolates, and like flavored chocolates; hard candies (including bonbons, butter candies, marble candies, etc.), soft candies (including caramels, nougats, gummy candies, marshmallows, etc.), drops, taffies, and like caramels; hard biscuits, cookies, *okaki* and *senbei* (kinds of Japanese rice crackers), and like baked confectioneries; lightly-pickled vegetables, vegetables pickled in soy sauce, salt, *miso,* sake cake, rice malt, rice bran paste, vinegar, mustard, *moromi,* or the like, pickled plums (*umezuke*), *fukujinzuke pickles, shibazuke pickles,* pickled gingers (*shogazuke*)*,* Korean pickles, vegetables pickled in plum vinegar (*umeshuzuke*) and like pickles; two-layered dressings, oil-free dressings, ketchups, sauces, and like seasoning liquids; strawberry jams, blueberry jams, marmalade, apple jams, apricot jams, preserves, and like jams; red wine and like fruit liquors; cherries, apricots, apples, strawberries, or peaches preserved in syrup and like processed fruits; hams, sausages, roast porks, and like processed meats; fish hams, fish sausages, fish paste, *kamaboko* (steamed fish paste), *chikuwa* (baked fish paste), *hanpen* (fish minced and steamed), *satsumaage* (fried fish ball), *datemaki* (omelet wrappers), whale bacon and like seafood paste products; cheese and like dairy products; *udon* (wheat noodle), *hiyamugi* or *somen* (fine noodle), *soba* (buckwheat noodle), Chinese noodle, spaghetti, macaroni, *bifun* (rice noodle), *harusame* (bean-jelly stick), wonton and like noodles; and various processed foods as side dishes, wheat gluten cake, denbu (a preparation of boiled and then mashed fish, flavored with sugar, soy sauce and so on) etc. With the above colorant, these food products will have stable brown colors.

Even when the brown colorant of the present invention is used for acidic foods and beverages, precipitation of insoluble matter can be suppressed, and thereby it can provides colored foods and beverages having a clear and highly transparent color. More preferably, the brown colorant of the present invention is suitable as a colorant for acidic foods and beverages having a pH value of not less than 2 and less than 4.6. Examples of acidic foods and beverages include sherbet, ice candies, and like frozen desserts; milk beverages, lactic acid bacteria beverages, soft drinks (including those containing fruit juices), carbonated beverages, fruit juice beverages, vegetable beverages, vegetable-fruit beverages, sports drinks, powdered beverages and like beverages; jellies, and like desserts; hard candies (including bonbons, butter candies, marble candies, etc.), drops and like caramels; lightly-pickled vegetables, vegetables pickled in soy sauce, salt, *miso,* sake cake, rice malt, rice bran paste, vinegar, mustard, *moromi* and the like, pickled plums (*umezuke*), *fukujinzuke pickles, shibazuke pickles,* pickled gingers (*shogazuke*), Korean pickles, vegetables pickled in plum vinegar (*umeshuzuke*) and like pickles; two-layered dressings, oil-free dressings, ketchups, sauces, and like seasoning liquids; strawberry jams, blueberry jams, marmalade, apple jams, apricot jams, preserves, and like jams; red wine and like fruit liquors; and cheese and like dairy products. More specifically, the brown colorant of the present invention is suitable for foods and beverages whose marketabilities may be decreased by turbidity or sedimentation due to precipitation of insoluble matter; particularly for soft drinks, carbonated beverages and sports drinks, which must have clear or transparent appearances. More particularly, the brown colorant of the present invention is suitable for acidic beverages having a pH value of not less than 2 and not more than 3.4.

Further, the brown colorant of the present invention may be used, in drugs, as a color for various kinds of tablets, capsules, drinkable preparations, lozenges, gargles and the like; in quasi-drugs, as a color for dentifrice, breath fresheners, mouthwashes and the like; in cosmetics, as a color for lipsticks, make-up cosmetics and the like; and in feedstuffs, as a color for cat food, dog food, pet fish food, aquaculture feed and the like. The brown colorant of the present invention may also be used as a colorant for soaps, shampoos and like daily necessities.

In these products, the amount of the brown colorant of the present invention is not set within a certain range, as it varies depending on the type and purpose of the product. However, for example, the amount of a malt extract of the present invention having an absorbance of 100 is appropriately adjusted within a range of generally 0.1 to 5 mass%, preferably 0.2 to 1 mass% in the colored product.

The coloring of products is performed by adding the malt extract of the present invention into a target product to be colored, and mixing the extract with the product. Since the malt extract of the present invention is acid-resistant and heat-resistant, the timing of incorporation is not particularly limited, and the coloring of the target product may be performed in a manner similar to that for conventional natural colorants, or in even more flexible manners. For example, when adding a brown color to a beverage, the malt extract of the present invention may be added to the target beverage together with various sugars such as high-fructose corn syrup, acids, fruit juices, etc., and subjected to sterilization before packed in a container.

[Example]

The present invention is more specifically explained with reference to Examples and Comparative Examples below. However, the present invention is not limited to these Examples. The term "parts" indicates "parts by mass" and "%" indicates "% by mass", unless otherwise specified. The "*" symbol in the specification indicates a product of San-Ei Gen F.F.I., Inc., and "**" indicates a registered trademark of San-Ei Gen F.F.I., Inc.

Experiment 1

Preparation of acidic carbonated beverages using different kinds of malt extracts

(1) Preparation of malt extract

40 g of a malt extract as a starting material (an untreated liquid malt extract) having an absorbance of 500 at a wavelength of 500 nm (this wavelength is used hereinafter) was added to 160 g of ion-exchanged water, thereby preparing a 20% malt extract (standard preparation). The above an untreated liquid malt extract was prepared by permeating roasted or unroasted malts in a 5- to 20-fold amount of water for 30 minutes to 15 hours at room temperature to 100°C, and saccharifying the extracted malt juice. Then, the saccharified extract was subjected to the following treatments (filtration, cation exchange resin treatment, enzyme treatment, centrifugation) to prepare a processed malt extract.

Examples 1 and 2, Comparative Example 1: Filtration

4 g of Celite (calcined diatom earth; particle diameter = 1 to 100 $\mu$m, produced by Celite Corporation) as a filtration adjuvant was bedded on a filter made of a cellulose-mixed ester and having a diameter of 11 cm (Advantec Toyo; Example 1: pore diameter = 0.6 $\mu$m, Example 2: pore diameter = 0.8 $\mu$m, Comparative Example 1: pore diameter = 1.0 $\mu$m). Through this filter, 300 g of the 20% malt extract (standard preparation) obtained above was filtered. The pore diameter of the filter denotes the maximum pore diameter measured according to the bubble point method (JIS K 3832; water was used). The resulting filtrate was condensed until the absorbance became 250, thereby preparing a filtered malt extract (Examples 1 and 2, Comparative Example 1).

Comparative Example 2: Cation exchange resin treatment

1000 g of the 20% malt extract (standard preparation) obtained above was passed through a column (column size $\varphi$ internal diameter = 60 mm, length = 2000 mm) filled with 500 mL of a cation exchange resin (Diaion WK-10: Mitsubishi Chemical Corp.) at an SV of 3, thereby removing polysaccharide, protein, etc. The resulting eluate was filtered with a qualitative filter (material: Cotton linters pulp, particle retention size: 5 $\mu$m, JIS P 3801: type 2, produced by Advantec Toyo) having a diameter of 11 cm. The resulting filtrate was condensed until the absorbance became 250, thereby preparing a cation-exchange resin treatment malt extract (Comparative Example 2). The retentive particle diameter of the qualitative filter is determined with the leakage particle diameter upon natural filtration of, for example, barium sulfate, as defined by JIS P 3801 (filter paper (for chemical analysis)).

Comparative Example 3: Enzyme treatment

0.08 g of pectinase (pectinase G "Amano" (Amano Enzyme Ltd.)) was added to 250 g of the 20% malt extract (standard preparation) obtained above, and the mixture was stirred at 50°C for 16 hours. Thereafter, the mixture was heated to 80°C, and then allowed to stand for 30 minutes to deactivate the enzyme. The resulting mixture was filtered using a qualitative filter (material: Cotton linters pulp, retentive particle diameter: 5 $\mu$m, JIS P 3801: type 2, produced by Advantec Toyo) having a diameter of 11 cm. The resulting filtrate was condensed until the absorbance became 250, thereby preparing an enzyme treatment malt extract (Comparative Example 3).

Comparative Example 4: Centrifugation (centrifugal effect = 3000G)

300 g of the 20% malt extract (standard preparation) was centrifuged for 30 minutes using a centrifuge (centrifugal effect = 3000 G). Then, the resulting extract was filtered using a qualitative filter (material: Cotton linters pulp, retentive particle diameter: 5 µm, JIS P 3801: type 2, produced by Advantec Toyo) having a diameter of 11 cm. The resulting filtrate was condensed until the absorbance became 250, thereby preparing a centrifuged malt extract. The centrifugal force can be found according to the following equation:

$$\text{Centrifugal force (G)} = 1.118 \times 0.00001 \times (\text{centrifugal radius}$$

$$(\text{cm})) \times (\text{revolutions per minute (rpm)})^2$$

(2) Acidic carbonated beverage (cola-flavored beverage)

Using malt extracts (Examples 1 to 2, Comparative Examples 1 to 4) subjected to various treatments in (1), acidic carbonated beverages (cola-flavored beverages) were prepared. More specifically, at first, the malt extracts (Examples 1 to 2, Comparative Examples 1 to 4) resulting from the above treatments were processed into syrups according to the formulation shown in Table 1. Then, 80 parts of carbonated water was added to 20 parts of each syrup, thereby preparing an acidic carbonated beverage (cola-flavored beverage) (absorbance = 1.1; a pH value = 2.4). The obtained carbonated beverages were stored in a cold, dark place for 1 month (5°C). Thereafter, generation of sediment in the beverages was observed by visual inspection. Table 2 shows the results.
[Table 1]

| Syrup | Amount (parts) |
|---|---|
| High-fructose corn syrup | 10.0 |
| Sugar | 5.5 |
| 85% phosphoric acid | 0.06 |
| (Anhydrous) citric acid | 0.045 |
| Trisodium citrate | 0.02 |
| Caffeine | 0.01 |
| Cola flavor No. 76069* | 0.1 |
| Malt extract | 0.44 |
| Gross after adding water | 20.0 |

[Table 2]

| | Treatments | Day 1 | Day 7 | After 1 month |
|---|---|---|---|---|
| Example 1 | Filtration with 0.6 µm | - | - | - |
| Example 2 | Filtration with 0.8 µm | - | - | - |
| Comparative Example 1 | Filtration with 1 µm | ± | + | + |
| Comparative Example 2 | Cation-exchange resin treatment | + | + | + |
| Comparative Example 3 | Enzyme treatment | + | + | + |
| Comparative Example 4 | Centrifugation (centrifugal force = 3000 G) | + | + | + |
| +: generation of sediment was observed by visual inspection  ±: generation of sediment was slightly observed by visual inspection  -: generation of sediment was not observed by visual inspection | | | | |

As shown in Table 2, after 1 month of storage under acidic conditions (pH value = 2.4), no generation of sedimentation or turbidity was observed in the acidic carbonated beverages prepared by using malt extracts (Examples 1 and 2) filtered by using filters having a pore diameter of 0.6 μm and 0.8 μm, even though they had a high concentration with an absorbance of 1.1. Thus, clear or transparent acidic carbonated beverages were successfully prepared.

In contrast, in the acidic carbonated beverages prepared by using malt extracts (Comparative Example 1) filtered by using a filter having a pore diameter of 1 μm, although sedimentation and turbidity were insignificant on the next day of preparation, the generation of sediment became significant seven days to 1 month after preparation, thereby significantly decreasing its marketability as a beverage. Similarly, generation of insoluble matter was observed in the acidic carbonated beverages prepared by using the cation-exchange resin-treated malt extract (Comparative Example 2), and the enzyme-treated malt extract (Comparative Example 3) and the centrifuged malt extract (Comparative Example 4), after the next day of the preparation, and the sedimentation or turbidity generated with time could not be prevented.

Such turbidity and sedimentation greatly affect the marketability of food and beverage products, particularly for those requiring high clarity or transparency, such as beverages. On the other hand, even after 1 month of storage, the acidic carbonated beverages prepared by using the malt extracts according to Examples 1 and 2 (malt extracts of the present invention) which were filtered by using filters having a pore diameter of 0.8 μm or less were kept clear or transparent without generation of sedimentation or turbidity. This shows that the removal of insoluble components(matter) having a particle diameter of 0.8 μm or more by filtration is effective to prevent generation of sedimentation or turbidity derived from malt extracts under acidic conditions.

Experiment 2: Acid-resistant tests for malt extracts and brown colorants

Acid-resistance tests (observation of presence/absence of precipitates of insoluble matter under acidic conditions) were performed using the filtered malt extract obtained in Example 1 and other various natural brown colorants (onion colorant, kaoliang colorant, tamarind colorant, cacao colorant, and Caramel colorant (type IV)).

More specifically, the various natural brown colorants were respectively added to citric acid and trisodium citrate buffers having a pH value of 2, 3, 4, 5, and 6. Each mixture was stirred, and stored at room temperature (25±5°C); then, presence/absence of generation of sedimentation with time was observed by visual inspection. The amounts of the natural brown colorants were adjusted so that each had an absorbance of 0.5 at a wavelength of 500 nm when dissolved in ion-exchanged water.

Tables 3 and 4 respectively show the results of the observation of presence/absence of sedimentation in the test solutions (Samples 1 to 5) on the day of preparation (1 hour after preparation), and after seven days of storage.

The marks in the tables represent the following results.

-: no sedimentation was observed

±: insignificant sedimentation was observed

+<++<+++<++++<+++++: significant sedimentation was observed (the greater the number of +, the more significant the generation of sedimentation)

[Table 3]

| ■ Presence/absence of sedimentation on the day of preparation | | | | | |
|---|---|---|---|---|---|
| Colorants | pH 2 | pH 3 | pH 4 | pH 5 | pH 6 |
| Malt extract | - | - | - | - | - |
| Onion colorant | ± | ± | ± | - | - |
| Kaoliang colorant | +++++ | +++++ | +++++ | - | - |
| Tamarind colorant | +++ | +++ | - | - | - |
| Cacao colorant | +++++ | ++++ | - | - | - |
| Caramel colorant (type IV) | - | - | - | - | - |

For reference, Fig. 1 (A) shows the appearance of a solution (solution 1) having a pH value of 3 colored with a malt extract (observation of sedimentation: " - "), and Fig. 1 (B) shows the appearance of a solution (solution 2) having a pH value of 3 colored with a kaoliang colorant (observation of sedimentation: " +++++ ").

[Table 4]

| ■ Presence/absence of sedimentation after seven days of storage | | | | | |
|---|---|---|---|---|---|
| Colorants | pH 2 | pH 3 | pH 4 | pH 5 | pH 6 |
| Malt extract | - | - | - | - | - |
| Onion colorant | ± | ± | ± | - | - |
| Kaoliang colorant | +++++ | +++++ | ++++ | - | - |
| Tamarind colorant | +++ | +++ | - | - | - |
| Cacao colorant | +++++ | ++++ | ++++ | - | - |
| Caramel colorant (type IV) | - | - | - | - | - |

As shown in Tables 3 and 4, when the various colorants are individually dissolved in a solution having a pH value of 3, the generation of sediment was observed in all colorants except for the malt extract and Caramel colorant (type IV) (i.e., the generation of sediment was observed in onion colorant, kaoliang colorant, tamarind colorant and cacao colorant) (see Fig. 1). Particularly, the solution (pH value = 3) colored with a kaoliang colorant was transparent and colorless due to the sedimentation of kaoliang colorant on the bottom of the container (Fig. 1 (B)).

Decrease in pH value to 3 in the tamarind colorant, and to 4 in the kaoliang colorant and the cacao colorant resulted in a significant increase in sedimentation, compared with those having a pH value of 4 or 5. Further, the onion colorant changed its color depending on the pH value; it was brown at a pH value of 6, and was more yellowish at a pH value of 2 to 5; that is, coloring to a desired color failed in the onion colorant. These results show that only the malt extract can be a replacement for Caramel colorant as a brown natural colorant under acidic conditions of a pH value of 2 to 4. Moreover, no apparent sedimentation was observed in all of the solutions (having a pH value of 2 to 6) prepared using the malt extract even after 9 months of storage at room temperature, demonstrating that the solutions had high stability over a long period of time.

Industrial Applicability

The present invention provides a malt extract in which visible precipitation of insoluble matter with time is significantly reduced even when the target product is deeply colored with an absorbance of about 0.1. Further, in addition to its safety as a natural material, malt extract is also acid-resistant. Therefore, unlike the other natural brown colorants (Caramel colorants I, II, III, kaoliang colorant, onion colorant, cacao colorant, and tamarind colorant), it does not cause insolubilization of the colorant under acidic conditions. Thus, the malt extract of the present invention is a useful acid-resistant brown colorant that can be a replacement for the conventional acid-resistant colorant, i.e., Caramel colorant (type IV).

Accordingly, the malt extract of the present invention is capable of adding a safe and clear or transparent brown color to acidic products such as carbonated beverages.

**Claims**

1.    A malt extract which comprises insoluble particles, a particle diameter of the insoluble particles being less than 0.9 $\mu$m.

2.    The malt extract according to claim 1, wherein the malt extract is prepared by filtering an untreated liquid malt extract or a treated liquid thereof using a filter having a pore diameter of 0.9 $\mu$m or less.

3.    The malt extract according to claim 2, wherein the untreated liquid malt extract or the treated liquid thereof has an absorbance of 10 to 1000 at a wavelength of 500 nm.

4.    The malt extract according to claim 2,
    wherein
    the untreated liquid malt extract is obtained by saccharifying a malt juice extracted from malt or roasted malt by heating, and

the treated liquid is either a diluted solution of an untreated liquid malt extract, a malt extract-redissolved liquid obtained by drying an untreated liquid malt extract or a diluted solution thereof and subsequently redissolving the resulting dry solid in a solvent, or a treated liquid obtained by subjecting an untreated liquid malt extract or a diluted solution thereof to centrifuge.

5. A brown colorant which comprises the malt extract according to any one of claims 1 to 4.

6. A colored product which is colored with the malt extract according to any one of claims 1 to 4.

7. The colored product according to claim 6, wherein the colored product is an acidic product having a pH value of not less than 2 and less than 4.6.

8. The colored product according to claim 7, wherein the acidic product is an acidic beverage.

9. A method for coloring food and beverage which comprises a step of adding the malt extract according to any one of claims 1 to 4 into food or beverage.

10. The method for coloring food and beverage according to claim 9, wherein the food or beverage is an acidic food or beverage having a pH value of not less than 2 and less than 4.6.

11. The method for coloring food and beverage according to claim 10, wherein the acidic food or beverage is an acidic beverage.

12. A method for preparing an acid-resistant malt extract which comprises a step of filtering an untreated liquid malt extract or a treated liquid thereof using a filter having a pore diameter of 0.9 μm or less.

13. The method according to claim 12, wherein the untreated liquid malt extract or a treated liquid thereof has an absorbance of 10 to 1000 at a wavelength of 500 nm.

14. The method according to claim 12, wherein the malt untreated liquid extract is obtained by saccharifying a malt juice extracted from malt or roasted malt, by heating; and the treated liquid of an untreated liquid malt extract is either a diluted solution of an untreated liquid malt extract, a malt extract-redissolved liquid obtained by drying an untreated liquid malt extract or a diluted solution thereof and redissolving a resulting dry solid in a solvent, or a treated liquid obtained by subjecting an untreated liquid malt extract or a diluted solution thereof to centrifuge.

Fig. 1

(A)          (B)

| INTERNATIONAL SEARCH REPORT | International application No. |
|---|---|
| | PCT/JP2009/069508 |

**A. CLASSIFICATION OF SUBJECT MATTER**
*A23L1/27(2006.01)i, A23L2/58(2006.01)i*

According to International Patent Classification (IPC) or to both national classification and IPC

**B. FIELDS SEARCHED**

Minimum documentation searched (classification system followed by classification symbols)
A23L1/27, A23L2/58

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)
JSTPlus/JMEDPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| Y | STARES, KW. Malt Extract Stability Study, Food Process (Tonbridge), January 1988, Vol.57, No.1, pages 10, 13, ISSN 0264-9462 | 1-14 |
| Y | LAVERS BILL, The myriad uses of malt, Food Ingred Anal Int, November 2006, Vol.28, No.6, pages 6-7, ISSN 0968-574X | 1-14 |
| Y | JP 64-67173 A (San-Ei Chemical Industries, Ltd.), 13 March 1989 (13.03.1989), entire text & US 4925690 A | 1-14 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 January, 2010 (22.01.10) | 02 February, 2010 (02.02.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 353 404 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003250503 A
- JP S63501193 B
- JP 2004350570 A
- JP H11266809 B